# EUROPEAN PATENT SPECIFICATION

(11) **EP 4 375 084 B1**
(45) Date of publication and mention of the grant of the patent: **15.10.2025**
(21) Application number: 22306729.9
(22) Date of filing: 23.11.2022
(51) Int. Cl.: B42D 25/36, B42D 25/373, C30B 29/64

(54) **ASSEMBLY COMPRISING AT LEAST ONE CIRCULAR POLYCRYSTALLINE COLLOIDAL MONOLAYER TETHERED ON A SOLID SUBSTRATE**
ANORDNUNG MIT MINDESTENS EINER KREISFÖRMIGEN POLYKRISTALLINEN KOLLOIDALEN MONOSCHICHT, DIE AUF EINEM FESTEN SUBSTRAT GEBUNDEN IST
ASSEMBLAGE COMPRENANT AU MOINS UNE MONOCOUCHE COLLOIDALE POLYCRISTALLINE CIRCULAIRE ATTACHÉE SUR UN SUBSTRAT SOLIDE

(43) Date of publication of application: 29.05.2024
(73) Proprietor: Paris Sciences et Lettres, 75006 Paris (FR); SORBONNE UNIVERSITE, 75006 Paris (FR); Centre national de la recherche scientifique, 75016 Paris (FR)
(72) Inventor: MOREL, Mathieu, 75019 Paris (FR); VIALETTO, Jacopo, 00196 Roma (IT); BAIGL, Damien, 75013 Paris (FR); RUDIUK, Sergii, 94800 Villejuif (FR)
(74) Representative: Icosa

(56) References cited:
- WO-A1-01/88044
- WO-A1-2010/070678
- ES-A1- 2 288 129
- US-B1- 6 180 226

## Description

### FIELD OF INVENTION

The present invention relates to an assembly comprising at least one circular polycrystalline colloidal monolayer tethered on a solid substrate; the at least one circular polycrystalline colloidal monolayer comprising at least one type of uniformly sized particles arranged into juxtaposed single-crystal domains which emit domain-specific structural colors when irradiated by a while light source. The invention also relates to a method for preparing said assembly, as well as to the use of said assembly for labelling a good of interest, by direct deposition or by transfer preferably into a polymeric film.

### BACKGROUND OF INVENTION

An increasing number of brands, particularly in the luxury sector, the pharmaceutical industry and the food industry, have to deal with counterfeiting and direct authentication of their products during resale between individuals and/or during use of said products by individuals.

Known solutions to label goods for authentication and anti-counterfeiting measures such as laser coding and printing technologies-related methods rely on deterministic principles and, while complex to implement, can therefore be copied by counterfeiters. On the opposite, methods that rely on stochastic processes allow for a very strong protection against duplication or forging by counterfeiters but may be difficult to implement and not adapted for easy authentication by a consumer or an end-user.

In addition, there is also an increasing interest for systems displaying complex patterns of structural colors, not only as an anti-counterfeiting solution but also for their visual and highly aesthetic aspects. Indeed, structural colors, with their distinctive metallic aspect, reflective/diffracting rather than absorbing characteristics, and their light source-dependent changeability convey to objects they are associated with a particularly noticeable and visually enjoyable nature, which is highly valued by consumers.

Document WO 2010/070678 Al discloses an assembly with a colloidal monolayer having at least one type of uniformly sized particles arranged into a single single-crystal domain.

Therefore, there is a real need to develop a novel identification mark that can be used to label goods and that can bring both a strong level of certification for the primary user (producers, transporters or resellers) and a fast but reliable authentication for end users (first-hand and second-hand owners or consumers). The mark shall also present an aesthetic aspect and be visually enjoyable for the consumers. In addition, the mark shall resist to external aggressions, including washing, falls or handling.

It has been surprisingly discovered that an assembly comprising at least one circular polycrystalline colloidal monolayer tethered on a solid substrate, which exhibits a unique pattern of multiple structural colors, achieves the aims mentioned previously. The unique geometry of the assembly (mm-sized circular monolayers) notably offers advantageous portability, ready implementation (as it is tethered on a solid substrate) as well as an easy detection of its unique photonic multicolored signature. The random juxtaposition of uniquely shaped domains exhibiting unclonable and non-printable structural colors ensures strong non-clonability and inviolability, as well as a visually arresting and enjoyable nature. Moreover, as it is composed of self-organized inert particles, it is environmentally friendly and the method to produce them generates no waste. The detection can be done with a simple white light source or ambient light (with a cell-phone for instance) and the user only needs a magnifying lens to see the domains for a proper pattern analysis and/or recognition.

Moreover, the assembly of the present invention can be easily realized with a wide range of solid substrates and of particle types and the circular polycrystalline colloidal monolayer can be easily embedded or transferred to another solid substrate without damaging the unique pattern of the original assembly.

### SUMMARY

The present invention relates to an assembly as defined in claim 1.

In one embodiment, the diameter of the at least one circular polycrystalline colloidal monolayer ranges from 0.5 to 2 mm, and preferably from 1 to 2 mm.

In one embodiment, the size of each single-crystal domain ranges from 100 to 100 000 µm².

In one embodiment, the cores of the at least one type of uniformly sized particles are chosen from inorganic materials, organic materials and mixtures thereof; preferably from silica, polymers such as pure polymers or polymers with additives such as metal oxide inclusion, metals and mixture thereof.

In one embodiment, the assembly of the invention comprises at least two circular polycrystalline colloidal monolayers, different or identical from one another, the at least two circular polycrystalline colloidal monolayers being either superimposed on one another or side by side, in an array, without touching each other.

The present invention also relates to a method for preparing an assembly as defined in claim 6.

In one embodiment, the contact angle of the drop of the aqueous dispersion (A) prepared in step a) on the solid substrate ranges from 20 ° to 120 ° and preferably from 40 ° to 100 °.

In one embodiment, the concentration of the at least one type of dispersed anionic colloidal particles ranges from 0.01 to 1 mg/mL, preferably from 0.02 to 0.8 mg/mL, and more preferably from 0.04 to 0.6 mg/mL of the aqueous dispersion (A).

In one embodiment, the concentration of the cationic surfactant ranges from CMC/8000 to CMC/500, and preferably from CMC/5000 to CMC/1000.

In one embodiment, the method of the invention further comprises, between steps c) and d), a step of injecting into the drop of aqueous dispersion (A), flipped in step c), an additional volume of said aqueous dispersion (A).

In one embodiment, the method of the invention further comprises, after step d) or optional step e), the repetition of steps b) to d), or optionally to e), wherein a second drop of the aqueous dispersion (A) prepared in step a) is deposited either on the top of or next to, but without touching it, the circular polycrystalline colloidal monolayer obtained in step d) or in optional step e), and wherein the volume of said second drop of aqueous dispersion (A) is lower than or equal to 15 µL.

In one embodiment, the method of the invention further comprises the following steps:
f) preparing an aqueous dispersion (B), different from aqueous dispersion (A) previously described, comprising:
   - at least one type of anionic colloidal particles having an average diameter ranging from 100 nm to 10 µm and having a dispersity of less than 5% of said diameter,
   - at least one cationic surfactant in a concentration ranging from CMC/10000 to CMC/100, where CMC is the critical micelle concentration of the at least one cationic surfactant, and
   - an aqueous medium;
g) depositing at least one drop of the aqueous dispersion (B) prepared in step f) either on the top of or next to, but without touching it, the circular polycrystalline colloidal monolayer obtained in step d) or in optional step e), the volume of said drop being lower than or equal to 15 µL and the contact angle of said drop on the solid substrate preferably ranging from 20 ° to 120 °;
h) protecting the upper face of the solid substrate obtained in step g) from air flow and flipping upside-down said solid substrate;
i) maintaining the solid substrate in the upside-down position to let the at least one drop of aqueous dispersion (B) evaporate; and then
j) optionally, flipping right side up the solid substrate obtained in step i).

In one embodiment, step d) and/or optional step i) are performed until complete evaporation of the aqueous medium of the drop of aqueous dispersion deposited respectively in step b) and optional step g).

In one embodiment, optional step e) and/or optional step j) are performed before complete evaporation of the aqueous medium of the drop of aqueous dispersion deposited respectively in step b) and/or optional step g).

In one embodiment, the method of the invention further comprises a step of transfer of the at least one circular polycrystalline colloidal monolayer obtained in step d) or in optional steps e), i) or j), preferably into a polymeric film.

The present invention further relates to the use of an assembly as defined in claim 16.

### DEFINITIONS

In the present invention, the following terms have the following meanings:
**"Ambient temperature"** refers to 20-25 °C.
**"Aqueous dispersion"** refers to a system in which particles of one material are dispersed in water.
**"Aqueous medium"** refers to a solution in which the solvent is water.
**"Average diameter",** according to the present invention, refers to the average of the diameters of the anionic colloidal particles present in the aqueous dispersion (A) or (B).
**"Circular"** refers to something having the shape of a circle, for instance a disk or an iris *(i.e.,* a ring).
**"CMC"** or **"critical micelle concentration"** refers to the concentration, for a given surfactant, above which aggregates of surfactant molecules, e.g., micelles, form.
**"Colloidal particles"** refers to nanometer to micrometer spherical particles that may be dispersed, typically in an aqueous or organic solvent, and which are not soluble in said substance.
**"Colloidal monolayer"** refers to colloidal particles arranged in a single layer.
**"Comprising"** or **"comprise"** is to be construed in an open, inclusive sense, but not limited to. In an embodiment, "comprising" means "consisting essentially of".
**"Contact angle",** according to the present invention, refers to the angle made by the gas/liquid interface of a drop of a liquid, for instance distilled water or a drop of aqueous dispersions (A) or (B), on a solid substrate. It quantifies the wettability of said solid substrate for the said liquid. The smaller the contact angle, the higher the wettability of the solid substrate, and, in the case of water as the said liquid, the more hydrophilic said solid substrate is.
**"Dispersity"** is a measure of the heterogeneity of the sizes of particles. According to the present invention, the dispersity of anionic colloidal particles refers to the coefficient of variation of the particle diameter (standard deviation divided by average diameter).
**"Evaporation of the drop of aqueous dispersion"** according to the present invention means evaporation of the aqueous medium of the drop of aqueous dispersion deposited on the solid substrate.
**"From X to** Y" refers to the range of values between X and Y, the limits X and Y being included in said range.
**"Polycrystalline"** refers to a deposit having at least two monocrystalline domains that are randomly oriented with respect to one another.
**"Silicone"** refers to an inorganic polymer comprising a chain of alternated silicon and oxygen atoms (the repeating unit is -Si-O-).
**"Surfactant"** defines a substance that lowers the interfacial energy between two liquids, between a gas and a liquid, or between a solid and a liquid. It often refers to an amphiphilic molecule with two parts of different polarity, one lipophilic and of low polarity, the other hydrophilic and of high polarity.

### BRIEF DESCRIPTION OF THE DRAWINGS

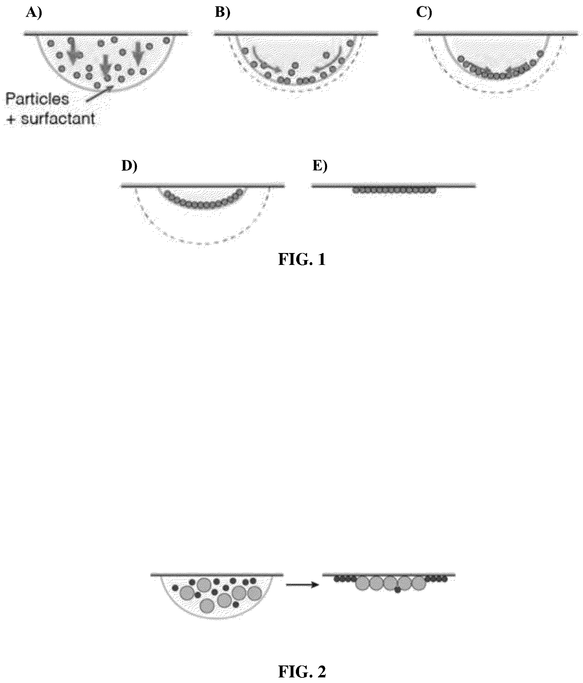

**Figure 1** is a scheme displaying the general process of the method for preparing an assembly according to the present invention.
**Figure 2** is a scheme displaying one embodiment of the method according to the present invention, said embodiment allowing to obtain a circular polycrystalline colloidal monolayer wherein the particles are separated by size.

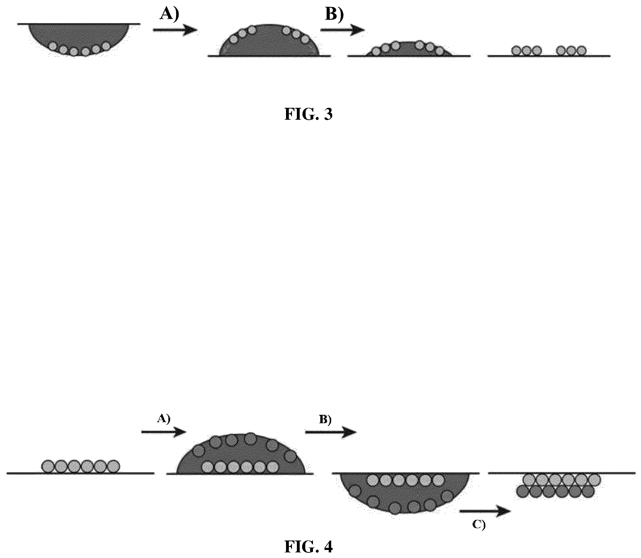

**Figure 3** is a scheme displaying one embodiment of the method according to the present invention, said embodiment allowing to obtain a polycrystalline colloidal monolayer which has the shape of an iris *(i.e.,* a ring).
**Figure 4** is a scheme displaying one embodiment of the method according to the present invention, wherein said method comprises further steps f) to j). Said embodiment allows to obtain two polycrystalline colloidal monolayer disks of particles, wherein the two monolayers are superimposed on one another.

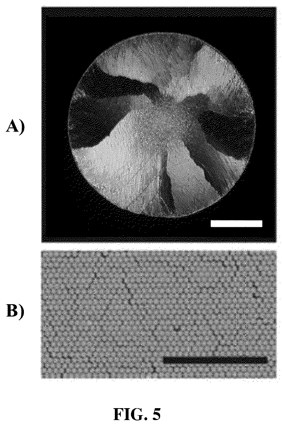

**Figure 5A** displays a reflection microscopy image of a polycrystalline colloidal monolayer disk of silica particles (scale bar: 200 µm) prepared by the method according to the present invention, wherein the average diameter of the silica particles is 0.56 µm (with a dispersity of 3.6%), wherein the disk is tethered on polystyrene and wherein the diameter of the disk is 750 µm. **Figure 5B** displays the Scanning Electron Microscope (SEM) image of said polycrystalline colloidal monolayer disk (scale bar: 10 µm).

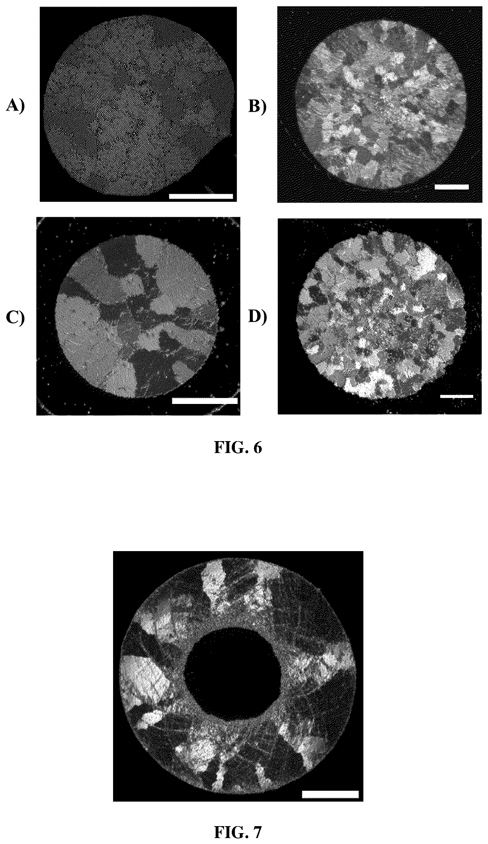

**Figure 6A** displays a reflection microscopy image of a polycrystalline colloidal monolayer disk of polystyrene particles (scale bar: 200 µm) prepared by the method according to the present invention, wherein the average diameter of the polystyrene particles is 4.65 µm (with a dispersity of 2.6%), wherein the disk is tethered on polystyrene, and wherein the diameter of the disk is 600 µm. **Figures 6B** and **6C** display reflection microscopy images of two different polycrystalline colloidal monolayer disks of silica particles (scale bar: 200 µm) prepared by the method according to the present invention, wherein the average diameter of the silica particles of each disk is 2.4 µm (with a dispersity of 1.7%), wherein each disk is tethered on polystyrene and wherein the respective diameters of the disks are 1000 µm and 500 µm. **Figures 6D** displays a reflection microscopy image of a polycrystalline colloidal monolayer disk of silica particles (scale bar: 200 µm) prepared by the method according to the present invention, wherein the average diameter of the silica particles is 2.4 µm (with a dispersity of 1.7%), wherein the disk is tethered on untreated glass and wherein the diameter of the disk is 1000 µm.
**Figure 7** displays a reflection microscopy image of a polycrystalline colloidal monolayer of silica particles (scale bar: 200 µm) having the shape of an iris prepared by the method according to the present invention, wherein the average diameter of the silica particles is 0.56 µm (with a dispersity of 3.6%), wherein the monolayer is tethered on polystyrene and wherein the diameter of the disk is 850 µm with a central hole having a diameter of 350 µm.

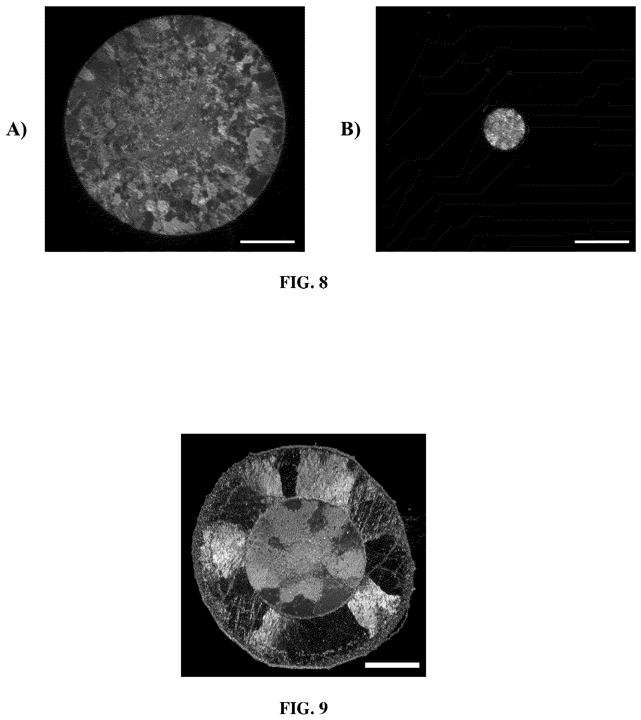

**Figure 8A and Figure 8B** display reflection microscopy images of two different polycrystalline colloidal monolayer disks of silica particles (scale bar: 500 µm) prepared by the method according to the present invention, wherein the average diameter of the silica particles of each disk is 2.4 µm (with a dispersity of 1.7%), wherein each disk is tethered on polystyrene and wherein the respective diameters of the disks are 2100 µm and 400 µm.
**Figure 9** displays a reflection microscopy image of a polycrystalline colloidal monolayer disk of silica particles (scale bar: 200 µm) prepared by the method according to the present invention, wherein silica particles are separated by size (the bigger particles have an average diameter of 2.4 µm with a dispersity of 1.7%, while the smaller ones have an average diameter of 0.56 µm with a dispersity of 3.6%), wherein the disk is tethered on polystyrene and wherein the diameter of the disk is 825 µm.

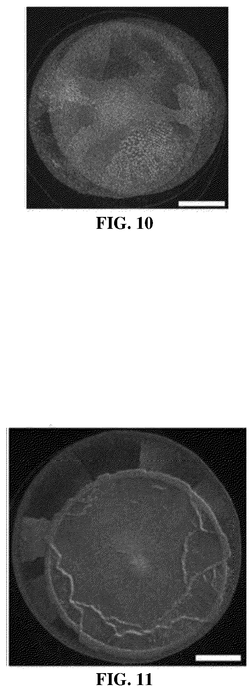

**Figure 10** displays a reflection microscopy image of two polycrystalline colloidal monolayer disks of silica particles (scale bar: 200 µm), prepared by the method according to the present invention, wherein the average diameter of the silica particles is 0.56 µm (with a dispersity of 3.6%), wherein said two monolayers are superimposed on one another and tethered on polystyrene and wherein the diameter of the disks is 750 µm.
**Figure 11** displays a reflection microscopy image of two polycrystalline colloidal monolayer disks of silica particles (scale bar: 200 µm), prepared by the method according to the present invention, wherein the average diameter of the silica particles in the first disk is 0.98 µm (with a dispersity of 2.7%) and the average diameter of the silica particles in the second disk is 0.56 µm (with a dispersity of 3.6%).The two monolayers are superimposed one another and tethered on polystyrene and the diameter of the first disk is 1000 µm whereas the diameter of the second disk is 800 µm.

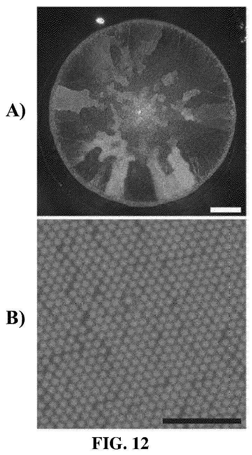

**Figure 12A** displays a reflection microscopy image of a polycrystalline colloidal monolayer disk of silica particles (scale bar: 200 µm) which is embedded in a NOA-based polymer slab, wherein the average diameter of the silica particles is 0.56 µm (with a dispersity of 3.6%) and wherein the diameter of the disk is 1250 µm. **Figure 12B** displays the Scanning Electron Microscope (SEM) image of said polycrystalline colloidal monolayer disk embedded in a NOA-based polymer slab (scale bar: 5 µm).

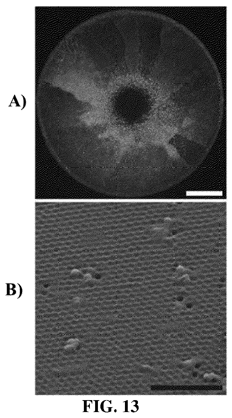

**Figure 13A** displays a reflection microscopy image of a mould in a cured PDMS-based polymer slab of a polycrystalline colloidal monolayer disk of silica particles (scale bar: 200 µm), wherein the average diameter of the silica particles is 0.56 µm (with a dispersity of 3.6%) and wherein the diameter of the disk is 1000 µm. **Figure 13B** displays the Scanning Electron Microscope (SEM) image of said mould (scale bar: 5 µm).

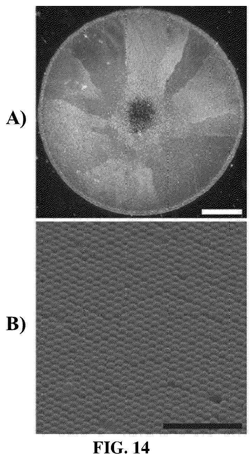

**Figure 14A** displays a reflection microscopy image of the direct replica in a cured NOA-based polymer slab of a polycrystalline colloidal monolayer disk of silica particles (scale bar: 200 µm), wherein the average diameter of the silica particles is 0.56 µm (with a dispersity of 3.6%), and wherein the diameter of the disk is 1000 µm. **Figure 14B** displays the Scanning Electron Microscope (SEM) image of said direct replica (scale bar: 5 µm).

### DETAILED DESCRIPTION

### Assembly comprising at least one circular polycrystalline colloidal monolayer tethered on a solid substrate

The present invention relates to an assembly comprising at least one circular polycrystalline colloidal monolayer tethered on a solid substrate; wherein the at least one circular polycrystalline colloidal monolayer comprises at least one type of uniformly sized particles arranged into juxtaposed single-crystal domains which are different from one another and which are randomly oriented with respect to one another; the diameter of said circular polycrystalline colloidal monolayer ranging from 0.25 to 2.5 mm. In other words, the assembly according to the present invention comprises at least one circular polycrystalline colloidal monolayer and a solid substrate; said at least one circular polycrystalline colloidal monolayer being tethered on said solid substrate.

### The at least one circular polycrystalline colloidal monolayer

The area of the at least one circular polycrystalline colloidal monolayer, also called deposit area, preferably ranges from 0.049 to 4.9 mm².

The diameter of the at least one circular polycrystalline colloidal monolayer preferably ranges from 0.5 to 2 mm, and more preferably from 1 to 2 mm.

The at least one circular polycrystalline colloidal monolayer is preferably shaped as a disk or as an iris *(i.e.,* a ring).

According to a preferred embodiment, the assembly of the present invention comprises at least two circular polycrystalline colloidal monolayers, which can be different or identical from one another, *i.e.,* the circular polycrystalline colloidal monolayers can comprise uniformly sized particles which have different or identical cores and/or different or identical average diameters and/or the diameter of each monolayer can be different or identical. The at least two circular polycrystalline colloidal monolayers may be either superimposed on one another or side by side, in an array, without touching each other. According to a first variant of this embodiment, the at least two circular polycrystalline colloidal monolayers are preferably superimposed on one another. According to a second variant of this embodiment, the at least two circular polycrystalline colloidal monolayers are preferably side by side, in an array, without touching each other. According to a third variant of this embodiment, the assembly of the present invention comprises more than two circular polycrystalline colloidal monolayers, some of said monolayers being superimposed on one another, while others being side by side, in an array, without touching each other.

Advantageously, the juxtaposed single-crystal domains emit domain-specific structural colors when irradiated by a white light source.

### The solid substrate

Advantageously, the solid substrate corresponds to any solid substrate. Preferably, the contact angle of a drop of distilled water on the solid substrate ranges from 20 ° to 120 ° and more preferably from 40 ° to 100 °.

The solid substrate is preferably chosen from polymer substrates, metal substrates or treated or untreated glasses.

According to a preferred embodiment, the solid substrate is a polymer substrate. Examples of polymer substrates suitable according to the present invention include, but are not limited to, polydimethylsiloxane, polyethylene, polypropylene, polystyrene, polyvinyl chloride, rubber, neoprene, nylon, polyacrylonitrile, polycarbonate, polytetrafluoroethylene and polyvinyl butyral. More preferably, the solid substrate is a polymer substrate chosen from polydimethylsiloxane, polyethylene, polypropylene, polystyrene and polyacrylonitrile. Even more preferably, the solid substrate is a polystyrene.

According to another embodiment, the solid substrate is preferably a metal substrate chosen from aluminium, silver, gold, copper, iron, bronze, steel, chromium, and zinc.

According to another embodiment, the solid substrate is preferably a treated or untreated glass.

### The at least one type of uniformly sized particles

Advantageously, the at least one type of uniformly sized particles are arranged into 2 to 10 000 juxtaposed single-crystal domains.

The size of each single-crystal domain comprised in the circular polycrystalline colloidal monolayer preferably ranges from 100 to 100 000 µm², and more preferably from 1000 to 50 000 µm².

Advantageously, the at least one type of uniformly sized particles have a dispersity of less than 5% of the average diameter and said average diameter ranges from 100 nm to 10 µm, preferably from 300 nm to 8 µm, and more preferably from 500 nm to 2.5 µm.

The cores of the at least one type of uniformly sized particles are preferably chosen from inorganic materials, organic materials and mixtures thereof. Preferably, the cores of the at least one type of uniformly sized particles are chosen from silica, polymers such as pure polymers or polymers with additives such as metal oxide inclusion, metals and mixtures thereof; and more preferably, the cores of the at least one type of uniformly sized particles are made of silica. In other words, the at least one type of uniformly sized particles are preferably silica particles.

In a first embodiment, the at least one circular polycrystalline colloidal monolayer comprises at least two types of uniformly sized particles having the same average diameter but different cores.

In a second embodiment, the at least one circular polycrystalline colloidal monolayer comprises at least two types of uniformly sized particles having the same core but different average diameters.

In a third embodiment, the at least one circular polycrystalline colloidal monolayer comprises at least two types of uniformly sized particles having different cores and different average diameters.

### Method for preparing an assembly according to the present invention

The invention also relates to a method for preparing an assembly according to the present invention, as defined previously, *i.e.,* an assembly comprising at least one circular polycrystalline colloidal monolayer tethered on a solid substrate. Said method comprises the following steps:
a) preparing an aqueous dispersion (A) comprising:
   - at least one type of anionic colloidal particles having an average diameter ranging from 100 nm to 10 µm and having a dispersity of less than 5% of said average diameter,
   - at least one cationic surfactant in a concentration ranging from CMC/10000 to CMC/100, where CMC is the critical micelle concentration of the at least one cationic surfactant, and
   - an aqueous medium;
b) depositing at least one drop of the aqueous dispersion (A) prepared in step a) on the upper face of a solid substrate, the volume of the at least one drop being lower than or equal to 15 µL;
c) protecting the upper face of the solid substrate obtained in step b) from air flow and flipping upside-down said solid substrate;
d) maintaining the solid substrate in the upside-down position to let the at least one drop of the aqueous dispersion (A) evaporate; and then
e) optionally, flipping right side up the solid substrate obtained in step d).

Steps a) to d), and optional step e), of the method for preparing an assembly according to the present invention are performed in that order.

The method for preparing an assembly according to the present invention is preferably performed at a temperature ranging from 4 to 99 °C, and more preferably at ambient temperature.

The method for preparing an assembly according to the present invention can be performed at various humidity conditions. Advantageously, said method is performed with a relative humidity ranging from 25 to 45%, preferably ranging from 25 to 40%.

In one embodiment, the method for preparing an assembly according to the present invention is performed at ambient temperature and with a relative humidity ranging from 25 to 40%, which is preferable to fasten the evaporation process.

The method for preparing an assembly according to the present invention relies on the process as shown in **Figure 1****.** After flipping upside-down the solid substrate, the at least one type of dispersed anionic colloidal particles first sediment toward the air/water interface of the drop and adsorb at this interface thanks to the cationic surfactant **(****Figure 1A****).** Then, said at least one type of dispersed anionic colloidal particles accumulate as a monolayer toward the center of the drop **(****Figure 1B****).** Meanwhile, the drop volume progressively reduces by evaporation and a progressive crystallization occurs **(****Figure 1C****).** When the drop interface pins **(****Figure 1D****),** final evaporation happens which leaves a circular deposit on the substrate **(****Figure 1E****).**

The definitions given previously for the assembly according to the present invention apply mutatis mutandis to the method for preparing said assembly, and vice versa.

### Step a)

### The aqueous dispersion (A)

The aqueous dispersion (A) comprises at least one type of uniformly sized anionic colloidal particles which are dispersed in the aqueous medium, said particles having a dispersity of less than 5% of the average diameter and said average diameter ranging from 100 nm to 10 µm, preferably from 300 nm to 8 µm, and more preferably from 500 nm to 2.5 µm.

In an embodiment, the cores of the at least one type of dispersed anionic colloidal particles are chosen from inorganic materials, organic materials and mixtures thereof. Preferably, the cores of the at least one type of dispersed anionic colloidal particles are chosen from silica, polymers such as pure polymers or polymers with additives such as metal oxide inclusion, metals and mixtures thereof; and more preferably, the cores of the at least one type of dispersed anionic colloidal particles are made of silica. In other words, the at least one type of dispersed anionic colloidal particles are preferably silica particles.

Advantageously, the concentration of the at least one type of dispersed anionic colloidal particles, present in the aqueous dispersion (A), ranges from 0.01 to 1 mg/mL, preferably from 0.02 to 0.8 mg/mL, and more preferably from 0.04 to 0.6 mg/mL of the aqueous dispersion (A).

Advantageously, the relative density of each dispersed anionic colloidal particle, present in the aqueous dispersion (A), is greater than or equal to 1.05, and more advantageously greater than or equal to 1.5. This ensures a better sedimentation of the particles.

Advantageously, the aqueous dispersion (A) comprises at least two types of dispersed anionic colloidal particles that are different from one another. "Particles different from one another" means, according to the present invention, that the at least two types of dispersed anionic colloidal particles have different cores and/or different average diameters.

In a first embodiment, the aqueous dispersion (A) comprises at least two types of dispersed anionic colloidal particles having the same average diameter but different cores.

In a second embodiment, the aqueous dispersion (A) comprises at least two types of dispersed anionic colloidal particles having the same core but different average diameters. This allows to obtain a circular polycrystalline colloidal monolayer wherein the particles are separated by size. Indeed, due to their greater weight, the large majority of the bigger particles collects in the center of the particle patch on the fluid interface, where they eventually crystallize; whereas the smaller particles accumulate and crystallize in the outer region of the patch, with only few of them that remain trapped in the interstices formed by the crystallization of the bigger particles **(****Figure 2****).**

In a third embodiment, the aqueous dispersion (A) comprises at least two types of dispersed anionic colloidal particles having different cores and different average diameters.

The aqueous dispersion (A) prepared in step a) of the method according to the present invention further comprises at least one cationic surfactant in a concentration ranging from CMC/10000 to CMC/100, where CMC is the critical micelle concentration of the at least one cationic surfactant.

The concentration of the at least one cationic surfactant preferably ranges from CMC/8000 to CMC/500, and more preferably ranges from CMC/5000 to CMC/1000. All the known methods to determine the CMC of a cationic surfactant can be employed to determine the CMC of the at least one cationic surfactant present in the aqueous dispersion (A). Notably, procedures relying on conductimetry measurements or surface tension measurements at different concentration of the surfactant are among the methods well-known by a skilled in the art. The CMC value of the majority of known surfactants is also published and available in textbooks, data bases or scientific articles.

Advantageously, the at least one cationic surfactant, present in the aqueous dispersion (A), is chosen from optionally polyoxyalkylenated primary, secondary or tertiary fatty amine salts, quaternary ammonium salts, nitrogen-heterocyclic surfactants (such as imidazolium, pyrrolidinium and pyridinium salts), and mixtures thereof; preferably from quaternary ammonium salts such as the halides of dodecyltrimethylammonium; and more preferably the at least one cationic surfactant is dodecyltrimethylammonium bromide. The CMC value of dodecyltrimethylammonium bromide in water, at ambient temperature and atmospheric pressure, is between 0.0155 and 0.016 mol/L.

### Step b)

### The drop of aqueous dispersion (A)

The method for preparing an assembly according to the present invention further comprises a step b), wherein at least one drop of aqueous dispersion (A) prepared in step a) is deposited on the upper face of a solid substrate.

Advantageously, the drop volume, corresponding to the volume of the drop of aqueous dispersion (A) deposited in step b), ranges from 0.25 µL to 15 µL, and preferably from 4 µL to 10 µL.

The contact angle of the drop of aqueous dispersion (A), prepared in step a), on the solid substrate preferably ranges from 20 ° to 120 °, and more preferably from 40 ° to 100 °.

### Step c) to optional step e)

The method for preparing an assembly according to the present invention further comprises a step c), wherein the upper face of the solid substrate obtained in step b) is protected from air flow and said solid substrate is flipped upside-down.

Step c) is preferably performed directly after the deposition of the drop of aqueous dispersion (A) on the upper face of the solid substrate, *(i.e.,* directly after step b)), without any intermediate waiting time.

The method for preparing an assembly according to the present invention further comprises a step d), wherein the solid substrate, flipped in step c), is maintained in the upside-down position to let the drop of the aqueous dispersion (A) evaporate. In other words, during step d), the aqueous medium of the drop of aqueous dispersion (A) evaporates, while the at least one type of dispersed anionic colloidal particles accumulate and crystalize, leaving a circular deposit on the solid substrate, as shown in **Figure 1****.**

The method for preparing an assembly according to the present invention further comprises an optional step e), wherein the solid substrate, maintained in the upside-down position to let the drop of aqueous dispersion (A) evaporate in step d), is flipped right side up.

According to a first embodiment, step d) is performed until complete evaporation of the drop of the aqueous dispersion (A) before performing, optionally, step e). In other words, according to this embodiment, the flipped solid substrate is maintained in the upside-down position until complete evaporation of the aqueous medium of the drop of aqueous dispersion (A), before optionally flipping said solid substrate right side up according to step e) of the method of the present invention. This allows to obtain, at the end of step d), a polycrystalline colloidal monolayer which is a disk.

According to a second embodiment, step d) is stopped prior to complete evaporation of the drop of aqueous dispersion (A) and step e) is performed necessarily after step d). In other words, according to this embodiment, step e) is performed necessarily before complete evaporation of the aqueous medium of the drop of aqueous dispersion (A). This allows to obtain, at the end of step e), a polycrystalline colloidal monolayer which has the shape of an iris *(i.e.,* a ring). Indeed, during the evaporation of the drop of aqueous dispersion (A), the at least one type of dispersed anionic colloidal particles accumulate and adsorb at the air/water interface **(****Figure 3A****).** Then, after flipping right side up the solid substrate obtained in step d) prior to complete evaporation of said drop of aqueous dispersion, the at least one type of dispersed anionic colloidal particles, still trapped at the air/water interface, accumulate at the rim of the drop and gradually distribute along the entire diameter **(****Figure 3B****),** thereby leading to the formation of a polycrystalline colloidal monolayer which has a ring shape.

Therefore, depending on whether step d) is performed until complete evaporation of the drop of the aqueous dispersion (A) or is stopped prior to said complete evaporation and is followed by optional step e), the circular polycrystalline colloidal monolayer is obtained either at the end of step d) or at the end of optional step e).

The holding time of the solid substrate in the upside-down position preferably ranges from 10 to 240 minutes, the precise time depending on the drop volume, temperature and humidity conditions, for ensuring complete evaporation of the aqueous medium of the drop of aqueous dispersion (A). Alternatively, for obtaining a polycrystalline colloidal monolayer which has the shape of an iris (*i.e*., a ring), the holding time of the solid substrate in the upside-down position preferably ranges from 10 to 120 minutes and step e) is necessarily performed before complete evaporation of the drop of aqueous dispersion (A).

### Additional steps

### Additional step c')

The method for preparing an assembly according to the present invention may further comprise an additional step, performed between steps c) and d), which consists in injecting into the drop of aqueous dispersion (A), flipped in step c), an additional volume of said aqueous dispersion (A).

This additional step is further mentioned step c'). This additional step c') allows to increase the volume of the drop of aqueous dispersion (A) which is attached to the flipped solid substrate, and therefore allows to increase the final deposit area. In other words, when step c') is performed in the method according to the present invention, the diameter of the polycrystalline colloidal monolayer thus obtained on the solid substrate is greater.

Advantageously, the total volume of the drop of aqueous dispersion (A) in step c'), corresponding to the sum of the volume of the drop of aqueous dispersion (A) deposited in step b) and of the additional volume of aqueous dispersion (A) injected in step c'), is lower than or equal to 55 µL. In other words, the additional volume of aqueous dispersion (A) injected in step c') is preferably lower than or equal to 40 µL, more preferably ranges from 0.25 µL to 40 µL, and more preferably from 10 µL to 30 µL.

### Repetition of steps b) to optional e)

According to one embodiment, the method for preparing an assembly according to the present invention may further comprise, after optional step e), the repetition of steps b) to optional e), wherein a second drop of the aqueous dispersion (A) prepared in step a) is deposited either on the top *(i.e.,* upper face) of or next to (without touching it) the circular polycrystalline colloidal monolayer obtained in step d) or in optional step e); the volume of said second drop of aqueous dispersion (A) being lower than or equal to 15 µL. The contact angle of the second drop of the aqueous dispersion (A) on the solid substrate preferably ranges from 20 ° to 120 °, and more preferably from 40 ° to 100 °. Preferably, the second drop of the aqueous dispersion (A) prepared in step a) is deposited on the top the circular polycrystalline colloidal monolayer obtained in step d) or in optional step e).

In other words, after deposition of the second drop of the aqueous dispersion (A) on the upper face of the circular polycrystalline colloidal monolayer obtained in step d) or in optional step e), the solid substrate thus obtained is protected from air flow and flipped upside-down (repetition of step c)), then maintained in the upside-down position to let the second drop of aqueous dispersion (A) evaporate (repetition of step d)); and then optionally flipped right side up (repetition of step e)) to obtain another circular polycrystalline colloidal monolayer either superimposed on the circular polycrystalline colloidal monolayer obtained in step d) or in optional step e) or side by side, in an array and without touching each other, with the circular polycrystalline colloidal monolayer obtained in step d) or in optional step e). The crystallization of the novel monolayer at the liquid interface allows to keep domains orientation and inter-particle distances of each monolayer unmodified between successive depositions.

Advantageously, the volume of the second drop of the aqueous dispersion (A) deposited in the repetition of step b) ranges from 0.25 µL to 15 µL, and more advantageously from 4 µL to 10 µL.

### Additional steps f) to j)

According to another embodiment, the method for preparing an assembly according to the present invention may further comprise the following steps:
f) preparing an aqueous dispersion (B), different from aqueous dispersion (A) previously described, comprising:
   - at least one type of anionic colloidal particles having an average diameter ranging from 100 nm to 10 µm and having a dispersity of less than 5% of said diameter,
   - at least one cationic surfactant in a concentration ranging from CMC/10000 to CMC/100, where CMC is the critical micelle concentration of the at least one cationic surfactant, and
   - an aqueous medium;
g) depositing at least one drop of the aqueous dispersion (B) prepared in step f) either on the top *(i.e.,* upper face) of or next to, but without touching it, the circular polycrystalline colloidal monolayer obtained in step d) or in optional step e) **(****Figure 4A****),** the volume of said drop being lower than or equal to 15 µL and the contact angle of said drop on the solid substrate preferably ranging from 20 ° to 120 °;
h) protecting the upper face of the solid substrate obtained in step g) from air flow and flipping upside-down said solid substrate **(****Figure 4B****);**
i) maintaining the solid substrate in the upside-down position to let the at least one drop of aqueous dispersion (B) evaporate; and then
j) optionally, flipping right side up the solid substrate obtained in step i).

This embodiment allows the obtention of another circular polycrystalline colloidal monolayer, superimposed on or next to, in an array (but without touching it), the circular polycrystalline colloidal monolayer previously obtained in step d) or in optional step e).

The crystallization of the novel monolayer at the liquid interface allows to keep domains orientation and inter-particle distances of each monolayer unmodified between successive depositions. Preferably, the at least one drop of the aqueous dispersion (B) prepared in step f) is deposited on the top of the circular polycrystalline colloidal monolayer previously obtained in step d) or in optional step e).

Additional steps f) to j) of the method for preparing an assembly according to the present invention are performed in that order.

The at least one cationic surfactant, the at least one type of dispersed anionic colloidal particles and the aqueous medium suitable for the aqueous dispersion (A) as described previously are also suitable, in nature and contents, for the aqueous dispersion (B) prepared in optional step f).

When the method for preparing an assembly according to the present invention comprises steps f) to optional j), step h) is preferably performed directly after the deposition of the drop of aqueous dispersion (B), *(i.e.,* directly after step g)), without any intermediate waiting time.

According to a first embodiment, when the method for preparing an assembly according to the present invention comprises steps f) to optional j), step i) is performed until complete evaporation of the drop of aqueous dispersion (B) (before optionally performing step j)) **(****Figure 4C****).** In other words, according to this embodiment, the flipped solid substrate in step i) is maintained in the upside-down position until complete evaporation of the aqueous medium of the drop of aqueous dispersion (B), before optionally flipping said solid substrate right side up according to step j). This allows to obtain another polycrystalline colloidal monolayer preferably superimposed on the circular polycrystalline colloidal monolayer previously obtained in step d) or in optional step e), wherein the monolayer deposited by way of steps f) to i) is a disk.

According to a second embodiment, when the method for preparing an assembly according to the present invention comprises steps f) to j), step i) is stopped prior complete evaporation of the drop of aqueous dispersion (B). In other words, according to this embodiment, step j) is necessarily performed before complete evaporation of the aqueous medium of the drop of aqueous dispersion (B). This allows to obtain another polycrystalline colloidal monolayer preferably superimposed on the circular polycrystalline colloidal monolayer previously obtained in step d) or in optional step e), wherein the monolayer deposited by way of steps f) to j) has the shape of an iris *(i.e., a* ring).

In one embodiment, when the method for preparing an assembly according to the present invention comprises steps f) to optional j), the average diameter of the at least one type of dispersed anionic colloidal particles of the aqueous dispersion (B) is lower than or equal to the average diameter of the at least one type of dispersed anionic colloidal particles of the aqueous dispersion (A).

In one embodiment, when the method for preparing an assembly according to the present invention comprises steps f) to optional j), it further comprises at least one repetition of steps f) to optional j). This allows to obtain at least one supplementary circular polycrystalline colloidal monolayer preferably superimposed on the circular polycrystalline colloidal monolayer obtained by way of original steps f) to optional j).

In an embodiment, when the method for preparing an assembly according to the present invention comprises steps f) to optional j), step d) and step i) are performed until complete evaporation of the aqueous medium of the drop of aqueous dispersion deposited respectively in step b) and step g). This allows to obtain another polycrystalline colloidal monolayer preferably superimposed on the circular polycrystalline colloidal monolayer obtained in step d), wherein both polycrystalline colloidal monolayers deposited are disks.

### Protection of the at least one circular polycrystalline colloidal monolayer

The method according to the present invention may optionally further comprise a step of protection of the at least one circular polycrystalline colloidal monolayer. This additional step allows a better protection of the at least one monolayer against external aggressions.

Any method known by a skilled in the art for the protection of a solid substrate can be applied for the protection of the at least one circular polycrystalline colloidal monolayer.

An example of protection of the at least one circular polycrystalline colloidal monolayer is the pouring of a liquid thermosetting or UV-curable prepolymer on said at least one circular polycrystalline colloidal monolayer and the following curing of said liquid prepolymer.

### Transfer of the at least one circular polycrystalline colloidal monolayer

The method according to the present invention may optionally further comprise a step of transfer of the at least one circular polycrystalline colloidal monolayer obtained in step d) or in optional steps e), i) or j), preferably into a polymeric film.

Any method known by a skilled in the art for the transfer of nano/microstructures into polymeric materials can be applied in the present invention.

The transfer of the at least one circular polycrystalline colloidal monolayer may advantageously be performed in a cured polymer slab. As an example, the transfer of the at least one circular polycrystalline colloidal monolayer obtained in step d) or in optional steps e), i) or j) can be performed according to the following steps:
k) pouring a liquid thermosetting or UV-curable prepolymer on the at least one circular polycrystalline colloidal monolayer obtained in step d) or in optional steps e), i) or j) and on the substrate to which said monolayer is tethered;
1) curing the liquid prepolymer of step k); and then
m) peeling off the cured polymer slab;
wherein the at least one circular polycrystalline colloidal monolayer of step k) is embedded in the cured polymer slab of step m).

In step k) of the transfer of the at least one circular polycrystalline colloidal monolayer obtained in step d) or in optional step e), i) or j) in a cured polymer slab, said at least one circular polycrystalline colloidal monolayer remains strongly bound to the underlying substrate and is not damaged by the liquid prepolymer solution, thereby allowing the transfer without damage and with a preservation of the unique arrangement of the crystalline domains with their specific orientations.

Advantageously, the liquid thermosetting prepolymer that can be used for transferring the at least one circular polycrystalline colloidal monolayer is chosen from silicones such as fluorosilicones, polyurethanes, bakelites, duroplasts, melamines, epoxies, benzoxazines, polyimides, bismaleimides, cyanate esters, furans, thiolytes and vinyl esters. In a preferred embodiment, the liquid thermosetting prepolymer is a silicone prepolymer, and more preferably a polydimethylsiloxane.

Advantageously, the UV-curable prepolymer that can be used for transferring the at least one circular polycrystalline colloidal monolayer is chosen from acrylated polyurethanes, epoxies, thiolenes, acrylated epoxies, acrylated polyesters, acrylates silicones and fluorosilicones. In a preferred embodiment, the UV-curable prepolymer is a thiolene prepolymer. Examples of commercially available UV-curable thiolene prepolymer are the Norland Optical Adhesives (NOA 81) sold by Norland Products.

The transfer of the at least one circular polycrystalline colloidal monolayer in a cured polymer slab can also be performed by replica moulding, either with direct replica or inverted replica. As an example, the moulding of the at least one circular polycrystalline colloidal monolayer obtained in step d) or in optional steps e), i) or j) in a cured polymer slab can comprise the following steps:
n) submitting the at least one circular polycrystalline colloidal monolayer obtained in step d) or in optional steps e), i) or j) and the substrate to which said monolayer is tethered to surface functionalization treatment;
o) pouring a liquid thermosetting prepolymer on the treated surface of step n);
p) curing the liquid thermosetting prepolymer of step o) to obtain a cured polymer slab; and then
q) peeling off the cured polymer slab of step p) to obtain a mould of the at least one circular polycrystalline colloidal monolayer obtained in step d) or in optional steps e), i) or j) of the method according to the present invention in said peeled-off cured polymer slab (see **Figure 6C** for steps m) and n)).

According to a preferred embodiment, the surface functionalization treatment of step n) is a chemical passivation of the surface, such as a silanization with 1H,1H,2H,2H-perfluorooctyltrichlorosilane. It allows to render the at least one circular polycrystalline colloidal monolayer obtained in step d) or in optional steps e), i) or j) non-adhesive to the liquid thermosetting prepolymer of step o). Therefore, said at least one circular polycrystalline colloidal monolayer obtained in step d) or in optional steps e), i) or j) does not attach to the liquid thermosetting prepolymer surface and consequently the colloidal particles remain on the substrate of step n), while the mould of the structure was obtained in the peeled-off cured polymer slab of step q).

The direct replication of the at least one circular polycrystalline colloidal monolayer obtained in step d) or in optional steps e), i) or j) can comprise the following steps:
r) pouring a liquid thermosetting or UV-curable prepolymer on the mould obtained in the moulding of the at least one circular polycrystalline colloidal monolayer obtained in step d) or in optional steps e), i) or j) in a cured polymer slab;
s) curing the liquid prepolymer of step r) to obtain a cured polymer slab; and then
t) peeling off the cured polymer slab of step s) to obtain a replica of the at least one circular polycrystalline colloidal monolayer obtained in step d) or in optional steps e), i) or j) of the method according to the present invention in said cured polymer slab.

The direct or inverted replication of the at least one circular polycrystalline colloidal monolayer can be performed in different cured polymer slabs using the same mould of the at least one circular polycrystalline colloidal monolayer. In other words, starting from a unique mould of the at least one circular polycrystalline colloidal monolayer, a first replication of said at least one circular polycrystalline colloidal monolayer in a first cured polymer slab can be performed, followed by a second replication in a second cured polymer slab, and so on.

The liquid thermosetting prepolymer and/or the UV-curable prepolymer as described previously are also suitable in nature for the replica moulding in a cured polymer slab of the at least one circular polycrystalline colloidal monolayer.

### Assembly directly obtained by the method according to the present invention

The present invention further relates to the assemblies comprising at least one circular polycrystalline colloidal monolayer tethered on a solid substrate which are directly obtained by the method according to the present invention.

### Use of the assembly comprising at least one circular polycrystalline colloidal monolayer

The present invention also relates to the use of an assembly according to the present invention for labelling a good of interest, by direct deposition or by transfer, preferably into a polymeric film. The unique arrangement of the crystalline domains with their specific orientation in the monolayer allows a fast identification of said good of interest. Furthermore, structural colors arising from white light reflected by the crystalline domains can allow such identification. Due to their complex and unique pattern, assemblies according to the present invention can for instance be used in anti-counterfeiting or product identification.

### EXAMPLES

The present invention is further illustrated by the following examples.

### Example 1: Application of the method according to the present invention to prepare an assembly comprising one polycrystalline colloidal monolayer disk of silica particles tethered on polystyrene.

### Materials and Methods

The method according to the present invention is applied, at ambient temperature and with 40% relative humidity, using the following steps:
a) preparing an aqueous dispersion comprising:
   - dodecyltrimethylammonium bromide (concentration = 10 µM which corresponds to CMC/1600),
   - deionized water, and
   - silica particles (average diameter = 0.56 µm with a dispersity of 3.6% and concentration = 0.05 mg/mL);
b) depositing a drop of the aqueous dispersion prepared in step a) on the upper surface of a polystyrene (PS) Petri dish (drop volume = 5 µL);
c) closing the Petri dish of step b) and flipping it upside-down; and then
d) maintaining the solid substrate in the upside-down position until complete evaporation of the deionized water in approximately 100 minutes.

### Results

An assembly comprising one polycrystalline colloidal monolayer disk of silica particles tethered on polystyrene is obtained. The diameter of the disk is 0.75 mm and the deposit area, which corresponds to the area of the disk, is 0.44 mm². The reflection microscopy and SEM images of the polycrystalline colloidal monolayer disk of silica particles are shown in **Figure 5A** and **5B****.** Structural colors arise from the domains of closely-packed particles observable in **Figure 5B****,** wherein the particles are packed with various orientation relative to the light source.

### Example 2: Application of the method according to the present invention to prepare four assemblies each comprising one polycrystalline colloidal monolayer disk of particles tethered on a solid substrate.

### Materials and Methods

The same procedure as the one presented in Example 1 was applied, except that three different set of conditions were employed:

| | .Core material of the particles | Average diameter of the particles (µm) (dispersity) | Concentration of the particles (mg/mL) | Solid substrate |
|---|---|---|---|---|
| Set 1 | Polystyrene | 4.65 (2.6%) | 0.3 | Polystyrene |
| Set 2 | Silica | 2.4 (1.7%) | 0.05 | Polystyrene |
| Set 3 | Silica | 2.4 (1.7%) | 0.01 | Polystyrene |
| Set 4 | Silica | 2.4 (1.7%) | 0.05 | Untreated glass |

### Results

Four different assemblies each comprising one polycrystalline colloidal monolayer disk of particles tethered on a substrate are obtained. For the first set of conditions, the reflection microscopy image of the corresponding polycrystalline colloidal monolayer disk of polystyrene particles tethered on a polystyrene substrate is shown in **Figure 6A** (disk diameter of 600 µm). Similarly, for the second and third set of conditions, the reflection microscopy images of the corresponding polycrystalline colloidal monolayer disks of silica particles tethered on a polystyrene substrate are shown respectively in **Figure 6B** and **Figure 6C** (disk diameters of respectively 1000 µm and 500 µm). For the fourth set of conditions, the reflection microscopy image of the corresponding polycrystalline colloidal monolayer disk of silica particles tethered on an untreated glass substrate is shown in **Figure 6D** (disk diameter of 1000 µm).

### Comparative example 1: Application of the method according to the present invention without cationic surfactant.

### Materials and Methods

Comparative example 1 differs from Example 1 in that the aqueous dispersion of step a) does not comprise dodecyltrimethylammonium bromide. In other words, the aqueous dispersion of the step a) in Comparative example 1 does not comprise a cationic surfactant.

### Results

Unlike in Example 1 where an assembly comprising one polycrystalline colloidal monolayer disk of silica particles tethered on polystyrene is obtained, in comparative example 1 a thick multi-layer deposit of smaller diameter (200 µm) is obtained. This result demonstrates the need to have at least one cationic surfactant in the aqueous dispersion of the method according to the present invention.

### Comparative example 2: Application of the method according to the present invention without flipping upside-down the solid substrate.

### Materials and Methods

Comparative example 2 differs from Example 1 in that steps c) to d) are replaced by the following step: closing the Petri dish of step b). In other words, the solid substrate in Comparative example 2 is not flipped upside-down.

### Results

Unlike in Example 1 where an assembly comprising one polycrystalline colloidal monolayer disk of silica particles tethered on polystyrene is obtained, in Comparative example 2 a non-circular multilayer deposit (typical size 700 µm) with only localized micrometric domains exhibiting structural colors is obtained, wherein said domains display a lack of overall organization and clear domains borders. This result demonstrates the need to flip upside-down the solid substrate in the method according to the present invention.

### Comparative example 3: Application of the method according to the present invention using a cationic surfactant with a concentration equal to CMC/16.

### Materials and Methods

Comparative example 3 differs from Example 1 in that the cationic surfactant dodecyltrimethylammonium bromide has a concentration equal to 1 mM, which corresponds to CMC/16.

### Results

Unlike in Example 1 where an assembly comprising one polycrystalline colloidal monolayer disk of silica particles tethered on polystyrene is obtained, in Comparative example 3 a disordered deposit of diameter 800 mm with local gel-like structure and particles spread over the whole wetted area is obtained. This result demonstrates the need to have a cationic surfactant with a concentration ranging from CMC/10000 to CMC/100 in the method according to the present invention.

### Example 3: Application of the method according to the present invention to prepare an assembly comprising one polycrystalline colloidal monolayer of silica particles which has the shape of an iris (i.e., a ring) and which is tethered on polystyrene.

### Materials and Methods

The method according to the present invention is applied, at ambient temperature and with 40% relative humidity, using the following steps:
a) preparing an aqueous dispersion comprising:
   - dodecyltrimethylammonium bromide (concentration = 10 µM which corresponds to CMC/1600),
   - deionized water, and
   - silica particles (average diameter = 0.56 µm with a dispersity of 3.6% and
   concentration = 0.05 mg/mL);
b) depositing a drop of the aqueous dispersion prepared in step a) on the upper surface of a polystyrene (PS) Petri dish (drop volume = 5 µL);
c) closing the Petri dish of step b) and flipping it upside-down;
d) maintaining the solid substrate in the upside-down position during approximately 90 to 105 minutes;
e) before complete evaporation of the deionized water, flipping right side up the Petri dish obtained in step d); and then
f) maintaining the solid substrate in the right side up position until complete evaporation of the deionized water.

### Results

An assembly comprising a polycrystalline colloidal monolayer of silica particles having the shape of an iris and being tethered on polystyrene is obtained. The diameter of the disk is 850 µm with a central hole having a diameter of 350 µm. The reflection microscopy image of said polycrystalline colloidal monolayer of silica particles is shown in **Figure 7****.**

### Example 4: Application of the method according to the present invention to prepare an assembly comprising one polycrystalline colloidal monolayer disk of silica particles tethered on polystyrene.

### Materials and Methods

The method according to the present invention is applied, at ambient temperature and with 40% relative humidity, using the following steps:
a) preparing an aqueous dispersion comprising:
   - dodecyltrimethylammonium bromide (concentration = 5 µM which corresponds to CMC/3200),
   - deionized water, and
   - silica particles (average diameter = 2.4 µm with a dispersity of 1.7% and concentration = 0.05 mg/mL);
b) depositing a drop of the aqueous dispersion prepared in step a) on the upper face of a polystyrene (PS) Petri dish;
c) closing the Petri dish of step b) and flipping it upside-down;
d) injecting into the drop of aqueous dispersion, flipped in step c), an additional volume of said aqueous dispersion; and then
e) maintaining the solid substrate in the upside-down position until complete evaporation of the deionized water in approximately 2 to 4 hours.

Two different set of conditions was applied:

| | Volume of the drop deposited in step b) (µL) | Additional volume of aqueous dispersion injected in step d) (µL) | Total volume of the drop after injection in step d) (µL) |
|---|---|---|---|
| Set 1 | 10 | 20 | 30 |
| Set 2 | 0.5 | 0 | 0.5 |

### Results

Two different assemblies each comprising one polycrystalline colloidal monolayer disk of silica particles tethered on polystyrene are obtained. The reflection microscopy images of the polycrystalline colloidal monolayer disk of silica particles corresponding to the first set of conditions and to the second set of conditions are shown respectively in **Figure 8A** and **Figure 8B****.** For the first set of conditions, a deposit area of 3.5 mm² (2100 µm diameter) is obtained whereas for the second set of conditions, a deposit area of 0.125 mm² (400 µm diameter) is obtained. Thus, injecting an additional volume of aqueous dispersion allows to obtain a larger polycrystalline colloidal monolayer disk without exceeding the volume of 15 µl in step b) required for the drop of aqueous dispersion to remain held on the substrate when it is flipped upside-down.

### Example 5: Application of the method according to the present invention using dispersed anionic colloidal particles with two different average diameters.

### Materials and Methods

The method according to the present invention is applied, at ambient temperature and with 40% relative humidity, using the following steps:
a) preparing an aqueous dispersion comprising:
   - dodecyltrimethylammonium bromide (concentration = 10 µM which corresponds to CMC/1600),
   - deionized water, and
   - two types of silica particles (average diameters = 0.56 µm with a dispersity of 3.6% at concentration 0.05 mg/mL and 2.4 µm with a dispersity of 1.7% at concentration 0.1 mg/mL);
b) depositing a drop of the aqueous dispersion prepared in step a) on the upper face of a polystyrene (PS) Petri dish (drop volume = 5 µL);
c) closing the Petri dish of step b) and flipping it upside-down; and then
d) maintaining the solid substrate in the upside-down position until complete evaporation of the deionized water in approximately 100 minutes.

### Results

An assembly comprising one polycrystalline colloidal monolayer disk of silica particles tethered on polystyrene is obtained, wherein big (average diameter = 2.4 µm with a dispersity of 1.7%) and small (average diameter = 0.56 µm with a dispersity of 3.6%) particles are separated by size. The diameter of the disk is 825 µm. The reflection microscopy image of said polycrystalline colloidal monolayer disk of silica particles is shown in **Figure 9****.** Therefore, the method according to the present invention allows to achieve controlled colloidal deposition with complex architectures, not easily accessible by common deposition strategies.

### Example 6: Application of the method according to the present invention to prepare an assembly comprising two polycrystalline colloidal monolayer disks of silica particles superimposed on one another and tethered on polystyrene.

### Materials and Methods

The method according to the present invention is applied, at ambient temperature and with 40% relative humidity, using the following steps:
a) preparing an aqueous dispersion comprising:
   - dodecyltrimethylammonium bromide (concentration = 10 µM which corresponds to CMC/1600),
   - deionized water, and
   - silica particles (average diameter = 0.56 µm with a dispersity of 3.6% and concentration = 0.05 mg/mL);
b) depositing a first drop of the aqueous dispersion prepared in step a) on the upper face of a polystyrene (PS) Petri dish (drop volume = 5 µL);
c) closing the Petri dish of step b) and flipping it upside-down;
d) maintaining the solid substrate in the upside-down position until complete evaporation of the deionized water in approximately 100 minutes;
e) flipping right side up the Petri dish obtained in step d) and opening it;
f) depositing a second drop of the aqueous dispersion prepared in step a) on the upper face of the polycrystalline colloidal monolayer disk of silica particles obtained in step d) (drop volume = 5 µL);
g) closing the Petri dish of step f) and flipping it upside-down; and then
h) maintaining the solid substrate in the upside-down position until complete evaporation of the deionized water in approximately 100 minutes.

### Results

An assembly comprising two polycrystalline colloidal monolayer disks of silica particles tethered on polystyrene is obtained, wherein the two monolayers are superimposed on one another. The diameter of the disks is 750 µm. The reflection microscopy image of said two polycrystalline colloidal monolayer disks of silica particles is shown in **Figure 10****.**

### Example 7: Application of the method according to the present invention to prepare an assembly comprising two polycrystalline colloidal monolayer disks of silica particles superimposed on one another and tethered on polystyrene.

### Materials and Methods

The method according to the present invention is applied, at ambient temperature and with 40% relative humidity, using the following steps:
a) preparing a first aqueous dispersion comprising:
   - dodecyltrimethylammonium bromide (concentration = 10 µM which corresponds to CMC/1600),
   - deionized water, and
   - silica particles (average diameter = 0.98 µm with a dispersity of 2.7% and concentration = 0.1 mg/mL);
b) depositing a drop of the first aqueous dispersion prepared in step a) on the upper face of a polystyrene (PS) Petri dish (drop volume = 7 µL);
c) closing the Petri dish of step b) and flipping it upside-down;
d) maintaining the solid substrate in the upside-down position until complete evaporation of the deionized water in approximately 120 minutes;
e) flipping right side up the Petri dish obtained in step d) and opening it;
f) preparing a second aqueous dispersion comprising:
   - dodecyltrimethylammonium bromide (concentration = 10 µM which corresponds to CMC/1600),
   - deionized water, and
   - silica particles (average diameter = 0.56 µm with a dispersity of 3.6% and concentration = 0.05 mg/mL);
g) depositing a drop of the second aqueous dispersion prepared in step f) on the upper face of the polycrystalline colloidal monolayer disk of silica particles obtained in step d) (drop volume = 10 µL);
h) closing the Petri dish of step g) and flipping it upside-down; and then
i) maintaining the solid substrate in the upside-down position until complete evaporation of the deionized water.

### Results

An assembly comprising two polycrystalline colloidal monolayer disks of silica particles tethered on polystyrene is obtained, wherein the two monolayers are superimposed on one another. The diameter of the first disk, obtained by way of steps a) to d), is 1000 µm, while the diameter of the second disk, obtained by way of steps f) to i) and superimposed on the first disk, is 800 µm. The reflection microscopy image of the two polycrystalline colloidal monolayer disks of silica particles is shown in **Figure 11****.** Examples 6 and 7 illustrate the fact that the method for preparing an assembly according to the present invention allows to pattern ordered monolayers above already formed ones, conveniently producing colloidal materials with structural hierarchies.

### Example 8: Application of the method according to the present invention with an additional step of transfer of the circular polycrystalline colloidal monolayer in a cured polymer slab.

### Materials and Methods

The method according to the present invention is applied, at ambient temperature and with 40% relative humidity, using the following steps:
a) preparing an aqueous dispersion comprising:
   - dodecyltrimethylammonium bromide (concentration = 10 µM which corresponds to CMC/1600),
   - deionized water, and
   - silica particles (average diameter = 0.56 µm with a dispersity of 3.6% and concentration = 0.05 mg/mL);
b) depositing a drop of the aqueous dispersion prepared in step a) on the upper face of a polystyrene (PS) Petri dish (drop volume = 15 µL);
c) closing the Petri dish of step b) and flipping it upside-down;
d) maintaining the solid substrate in the upside-down position until complete evaporation of the deionized water; and then
e) flipping right side up the Petri dish obtained in step d).

The polycrystalline colloidal monolayer disk of silica particles thus obtained is transferred in a cured polymer slab using the following steps:
a) pouring UV-curable NOA 81 photopolymer on the polycrystalline colloidal monolayer disk of silica particles obtained in step d) and on the polystyrene to which said monolayer is tethered;
b) applying a flat PDMS-based polymer slab on top of the NOA 81 photopolymer of step a);
c) curing the NOA 81 photopolymer of step b) with UV irradiation;
d) removing the flat PDMS-based polymer slab from the top of the cured NOA-based polymer slab of step c); and then
e) peeling off the cured polymer slab.

### Results

An assembly comprising one polycrystalline colloidal monolayer disk of silica particles embedded in a NOA-based polymer slab is obtained. The diameter of the disk is 1250 µm. The reflection microscopy and SEM images of the polycrystalline colloidal monolayer disk embedded in the NOA-based polymer slab are shown in **Figure 12A and 12B****.**

### Example 9: Application of the method according to the present invention with an additional step of transfer of the circular polycrystalline colloidal monolayer in a cured polymer slab.

### Materials and Methods

The method according to the present invention is applied, at ambient temperature and with 40% relative humidity, using the following steps:
a) preparing an aqueous dispersion comprising:
   - dodecyltrimethylammonium bromide (concentration = 10 µM which corresponds to CMC/1600),
   - deionized water, and
   - silica particles (average diameter = 0.56 µm with a dispersity of 3.6% and concentration = 0.05 mg/mL);
b) depositing a drop of the aqueous dispersion prepared in step a) on the upper face of a polystyrene (PS) Petri dish (drop volume = 15 µL);
c) closing the Petri dish of step b) and flipping it upside-down;
d) maintaining the solid substrate in the upside-down position until complete evaporation of the deionized water; and then
e) flipping right side up the Petri dish obtained in step d).

The polycrystalline colloidal monolayer disk of silica particles thus obtained is moulded in a heat-cured polymer slab using the following steps:
a) submitting the polycrystalline colloidal monolayer disk of silica particles obtained in step d) and the polystyrene to which said monolayer is tethered to a silanization with 1H,1H,2H,2H-perfluorooctyltrichlorosilane;
b) pouring liquid PDMS on the treated surface of step a);
c) curing with temperature the liquid PDMS of step b) to obtain a cured PDMS-based polymer slab;
d) peeling off the cured PDMS-based polymer slab of step c).

The mould thus obtained is used to replicate the polycrystalline colloidal monolayer disk of silica particles in a UV-cured polymer slab using the following steps:
a) pouring UV-curable NOA photopolymer on the peeled-off cured PDMS-based polymer slab obtained in step d) of the moulding of the polycrystalline colloidal monolayer disk of silica particles;
b) curing the NOA photopolymer of step a) with UV irradiation to obtain a UV-cured NOA-based polymer slab; and then
c) peeling off the cured NOA-based polymer slab of step b).

### Results

A polycrystalline colloidal monolayer disk of silica particles of diameter 1000 µm is obtained in step d). A mould of said polycrystalline colloidal monolayer disk is then obtained in a cured PDMS-based polymer slab. The diameter of said mould is also 1000 µm. The reflection microscopy and SEM images of the mould are shown in **Figure 13A** and **13B****.** A direct replica of the polycrystalline colloidal monolayer disk of silica particles obtained in step d) of the method according to the present invention is then obtained in a cured NOA-based polymer slab. The diameter of said direct replica is also 1000 µm. The reflection microscopy and SEM images of the direct replica are shown in **Figure 14A** and **14B****.**

Examples 8 and 9 show that the method according to the present invention is not only able to provide an assembly comprising at least one circular polycrystalline colloidal monolayer, but also that the circular polycrystalline colloidal monolayer can further be exactly transferred without damage. Domains organization and orientation of the original circular polycrystalline colloidal monolayer are identically transferred thus retaining a similar structural coloration easily detectable with a white light source. The polymer slabs thus obtained can then also be used to label goods and allow their identification.

## Claims

1. An assembly comprising at least one circular polycrystalline colloidal monolayer tethered on a solid substrate; wherein the at least one circular polycrystalline colloidal monolayer comprises at least one type of uniformly sized particles arranged into juxtaposed single-crystal domains which are different from one another and which are randomly oriented with respect to one another; the diameter of said circular polycrystalline colloidal monolayer ranging from 0.25 to 2.5 mm.

2. The assembly according to claim **1,** wherein the diameter of the at least one circular polycrystalline colloidal monolayer ranges from 0.5 to 2 mm, and preferably from 1 to 2 mm.

3. The assembly according to claim **1** or claim **2,** the size of each single-crystal domain ranges from 100 to 100 000 µm².

4. The assembly according to any of claims **1** to **3,** wherein the cores of the at least one type of uniformly sized particles are chosen from inorganic materials, organic materials and mixtures thereof; preferably from silica, polymers such as pure polymers or polymers with additives such as metal oxide inclusion, metals and mixture thereof.

5. The assembly according to any of claims **1** to **4,** wherein it comprises at least two circular polycrystalline colloidal monolayers, different or identical from one another, the at least two circular polycrystalline colloidal monolayers being either superimposed on one another or side by side, in an array, without touching each other.

6. Method for preparing an assembly as defined in any of the preceding claims comprising the following steps:
a) preparing an aqueous dispersion (A) comprising:
- at least one type of anionic colloidal particles having an average diameter ranging from 100 nm to 10 µm and having a dispersity of less than 5% of said diameter,
- at least one cationic surfactant in a concentration ranging from CMC/10000 to CMC/100, where CMC is the critical micelle concentration of the at least one cationic surfactant, and
- an aqueous medium;
b) depositing at least one drop of the aqueous dispersion (A) prepared in step a) on the upper face of a solid substrate, the volume of the at least one drop being lower than or equal to 15 µL;
c) protecting the upper face of the solid substrate obtained in step b) from air flow and flipping upside-down said solid substrate;
d) maintaining the solid substrate in the upside-down position to let the at least one drop of the aqueous dispersion (A) evaporate; and then
e) optionally, flipping right side up the solid substrate obtained in step d).

7. Method according to claim **6,** wherein the contact angle of the drop of the aqueous dispersion (A) prepared in step a) on the solid substrate ranges from 20 ° to 120 ° and preferably from 40 ° to 100 °.

8. Method according to claim **6** or claim **7,** wherein the concentration of the at least one type of dispersed anionic colloidal particles ranges from 0.01 to 1 mg/mL, preferably from 0.02 to 0.8 mg/mL, and more preferably from 0.04 to 0.6 mg/mL of the aqueous dispersion (A).

9. Method according to any one of claims **6** to **8,** wherein the concentration of the cationic surfactant ranges from CMC/8000 to CMC/500, and preferably from CMC/5000 to CMC/1000.

10. Method according to any one of claims **6** to **9,** wherein it further comprises, between steps c) and d), a step of injecting into the drop of aqueous dispersion (A), flipped in step c), an additional volume of said aqueous dispersion (A).

11. Method according to any one of claims **6** to **10,** wherein it further comprises, after step d) or optional step e), the repetition of steps b) to d), or optionally to e), wherein a second drop of the aqueous dispersion (A) prepared in step a) is deposited either on the top of or next to, but without touching it, the circular polycrystalline colloidal monolayer obtained in step d) or in optional step e), and wherein the volume of said second drop of aqueous dispersion (A) is lower than or equal to 15 µL.

12. Method according to any one of claims **6** to **11,** wherein it further comprises the following steps:
f) preparing an aqueous dispersion (B), different from aqueous dispersion (A) previously described, comprising:
- at least one type of anionic colloidal particles having an average diameter ranging from 100 nm to 10 µm and having a dispersity of less than 5% of said diameter,
- at least one cationic surfactant in a concentration ranging from CMC/10000 to CMC/100, where CMC is the critical micelle concentration of the at least one cationic surfactant, and
- an aqueous medium;
g) depositing at least one drop of the aqueous dispersion (B) prepared in step f) either on the top of or next to, but without touching it, the circular polycrystalline colloidal monolayer obtained in step d) or in optional step e), the volume of said drop being lower than or equal to 15 µL and the contact angle of said drop on the solid substrate preferably ranging from 20 ° to 120 °;
h) protecting the upper face of the solid substrate obtained in step g) from air flow and flipping upside-down said solid substrate;
i) maintaining the solid substrate in the upside-down position to let the at least one drop of aqueous dispersion (B) evaporate; and then
j) optionally, flipping right side up the solid substrate obtained in step i).

13. Method according to any one of claims **6** to **12,** wherein step d) and/or optional step i) are performed until complete evaporation of the aqueous medium of the drop of aqueous dispersion deposited respectively in step b) and optional step g).

14. Method according to any one of claims **6** to **13,** wherein optional step e) and/or optional step j) are performed before complete evaporation of the aqueous medium of the drop of aqueous dispersion deposited respectively in step b) and/or optional step g).

15. Method according to any one of claims **6** to **14,** wherein it further comprises a step of transfer of the at least one circular polycrystalline colloidal monolayer obtained in step d) or in optional steps e), i) or j), preferably into a polymeric film.

16. Use of the assembly according to any one of claims **1** to **5** for labelling a good of interest, by direct deposition or by transfer preferably into a polymeric film.

## Patentansprüche

1. Baugruppe, die mindestens eine kreisförmige polykristalline kolloidale Monoschicht umfasst, die auf einem festen Substrat befestigt ist; wobei die mindestens eine kreisförmige polykristalline kolloidale Monoschicht mindestens einen Typ von einheitlich großen Partikeln umfasst, die in nebeneinanderliegenden Einkristalldomänen angeordnet sind, die sich voneinander unterscheiden und zueinander zufällig ausgerichtet sind; wobei der Durchmesser der kreisförmigen polykristallinen kolloidalen Monoschicht 0,25 bis 2,5 mm beträgt.

2. Baugruppe nach Anspruch **1,** wobei der Durchmesser der mindestens einen kreisförmigen polykristallinen kolloidalen Monoschicht von 0,5 bis 2 mm und vorzugsweise von 1 bis 2 mm beträgt.

3. Baugruppe nach Anspruch **1** oder Anspruch **2,** wobei die Größe jeder Einkristalldomäne von 100 bis 100 000 µm² reicht.

4. Baugruppe nach einem der Ansprüche **1** bis **3,** wobei die Kerne des mindestens einen Typs von einheitlich großen Partikeln aus anorganischen Materialien, organischen Materialien und deren Mischungen ausgewählt sind; vorzugsweise aus Siliziumdioxid, Polymeren wie reinen Polymeren oder Polymeren mit Additiven wie Metalloxideinschlüssen, Metallen und deren Mischung.

5. Baugruppe nach einem der Ansprüche **1** bis **4,** wobei sie mindestens zwei voneinander unterschiedliche oder identische kreisförmige polykristalline kolloidale Monoschichten umfasst, wobei die mindestens zwei kreisförmigen polykristallinen kolloidalen Monoschichten entweder aufeinander oder nebeneinander in einem Array überlagert sind, ohne einander zu berühren.

6. Verfahren zur Herstellen einer Baugruppe nach einem der vorhergehenden Ansprüche, umfassend die folgenden Schritte:
a) Herstellen einer wässrigen Dispersion (A), umfassend:
- mindestens einen Typ anionischer kolloidaler Partikel mit einem Durchschnittsdurchmesser von 100 nm bis 10 µm und einer Dispersion von weniger als 5 % des Durchmessers,
- mindestens ein kationisches Tensid in einer Konzentration von CMC/10000 bis CMC/100, wobei CMC die kritische Mizellenkonzentration des mindestens einen kationischen Tensids ist, und
- ein wässriges Medium;
b) Aufbringen von mindestens einem Tropfen der in Schritt a) hergestellten wässrigen Dispersion (A) auf die obere Fläche eines festen Substrats, wobei das Volumen des mindestens einen Tropfens kleiner oder gleich 15 µl ist;
c) Schützen der oberen Fläche des in Schritt b) erhaltenen festen Substrats vor einem Luftstrom und Umdrehen des festen Substrats;
d) Halten des festen Substrats in der umgedrehten Position, um den mindestens einen Tropfen der wässrigen Dispersion (A) verdampfen zu lassen; und dann
e) optionales Drehen des in Schritt d) erhaltenen festen Substrats mit der rechten Seite nach oben.

7. Verfahren nach Anspruch **6,** wobei der Kontaktwinkel des Tropfens der in Schritt a) hergestellten wässrigen Dispersion (A) auf dem festen Substrat von 20 ° bis 120 ° und vorzugsweise von 40 ° bis 100 ° beträgt.

8. Verfahren nach Anspruch **6** oder Anspruch **7,** wobei die Konzentration des mindestens einen Typs von dispergierten anionischen kolloidalen Partikeln von 0,01 bis 1 mg/ml, vorzugsweise von 0,02 bis 0,8 mg/ml und noch bevorzugter von 0,04 bis 0,6 mg/ml der wässrigen Dispersion (A) reicht.

9. Verfahren nach einem der Ansprüche **6** bis **8,** wobei die Konzentration des kationischen Tensids von CMC/8000 bis CMC/500 und vorzugsweise von CMC/5000 bis CMC/1000 reicht.

10. Verfahren nach einem der Ansprüche **6** bis **9,** wobei es ferner zwischen den Schritten c) und d) einen Schritt des Injizierens eines zusätzlichen Volumens der wässrigen Dispersion (A) in den in Schritt c) umgedrehten Tropfen der wässrigen Dispersion (A) umfasst.

11. Verfahren nach einem der Ansprüche **6** bis **10,** wobei es ferner nach dem Schritt d) oder dem optionalen Schritt e) die Wiederholung der Schritte b) bis d) oder optional bis e) umfasst, wobei ein zweiter Tropfen der in Schritt a) hergestellten wässrigen Dispersion (A) entweder auf die Oberseite oder neben der in Schritt d) oder optional in Schritt e) erhaltenen kreisförmigen polykristallinen kolloidalen Monoschicht aufgebracht wird, ohne diese jedoch zu berühren, und wobei das Volumen des zweiten Tropfens der wässrigen Dispersion (A) kleiner oder gleich 15 µl ist.

12. Verfahren nach einem der Ansprüche **6** bis **11,** wobei es ferner die folgenden Schritte umfasst:
f) Herstellen einer wässrigen Dispersion (B), die sich von der zuvor beschriebenen wässrigen Dispersion (A) unterscheidet, umfassend:
- mindestens einen Typ anionischer kolloidaler Partikel mit einem Durchschnittsdurchmesser von 100 nm bis 10 µm und einer Dispersion von weniger als 5 % des Durchmessers,
- mindestens ein kationisches Tensid in einer Konzentration von CMC/10000 bis CMC/100, wobei CMC die kritische Mizellenkonzentration des mindestens einen kationischen Tensids ist, und
- ein wässriges Medium;
g) Aufbringen mindestens eines Tropfens der in Schritt f) hergestellten wässrigen Dispersion (B) entweder auf die Oberseite oder neben der in Schritt d) oder in dem optionalen Schritt e) erhaltenen kreisförmigen polykristallinen kolloidalen Monoschicht, ohne diese jedoch zu berühren, wobei das Volumen des Tropfens kleiner oder gleich 15 µL ist und der Kontaktwinkel des Tropfens auf dem festen Substrat vorzugsweise zwischen 20 ° und 120 ° beträgt;
h) Schützen der oberen Fläche des in Schritt g) erhaltenen festen Substrats vor einem Luftstrom und Umdrehen des festen Substrats;
i) Halten des festen Substrats in der umgedrehten Position, um den mindestens einen Tropfen wässriger Dispersion (B) verdampfen zu lassen; und dann
j) optionales Drehen des in Schritt i) erhaltenen festen Substrats mit der rechten Seite nach oben.

13. Verfahren nach einem der Ansprüche **6** bis **12,** wobei der Schritt d) und/oder der optionale Schritt i) bis zur vollständigen Verdampfung des wässrigen Mediums des in Schritt b) bzw. optionalem Schritt g) aufgebrachten Tropfens wässriger Dispersion durchgeführt werden.

14. Verfahren nach einem der Ansprüche **6** bis **13,** wobei der optionale Schritt e) und/oder der optionale Schritt j) vor der vollständigen Verdampfung des wässrigen Mediums des in Schritt b) bzw. dem optionalen Schritt g) aufgebrachten Tropfens wässriger Dispersion durchgeführt wird.

15. Verfahren nach einem der Ansprüche **6** bis **14,** wobei es ferner einen Schritt des Transferierens der in Schritt d) oder in dem optionalen Schritten e), i) oder j) erhaltenen mindestens einen kreisförmigen polykristallinen kolloidalen Monoschicht vorzugsweise in einen Polymerfilm umfasst.

16. Verwendung der Baugruppe nach einem der Ansprüche **1** bis **5** zum Kennzeichnen einer Ware von Interesse durch direktes Aufbringen oder durch Transfer vorzugsweise auf eine Polymerfolie.

## Revendications

1. Assemblage comprenant au moins une monocouche colloïdale polycristalline circulaire fixée sur un substrat solide ; dans lequel la au les monocouches colloïdales polycristallines circulaires comprennent au moins un type de particules de taille uniforme disposées en domaines monocristallins juxtaposés qui sont différents les uns des autres et qui sont orientés de manière aléatoire les uns par rapport aux autres ; le diamètre de ladite monocouche colloïdale polycristalline circulaire étant compris entre 0,25 à 2,5 mm.

2. Assemblage selon la revendication 1, dans lequel le diamètre de la ou des monocouches colloïdales polycristallines circulaires est compris entre 0,5 et 2 mm, et de préférence entre 1 et 2 mm.

3. Assemblage selon la revendication 1 ou la revendication 2, dans lequel la taille de chaque domaine monocristallin varie de 100 à 100 000 µm².

4. Assemblage selon l'une quelconque des revendications 1 à 3, dans lequel les noyaux du ou des types de particules de taille uniforme sont choisis parmi des matériaux inorganiques, des matériaux organiques et des mélanges de ceux-ci ; de préférence parmi la silice, des polymères tels que des polymères purs ou des polymères avec des additifs tels que des inclusions d'oxydes métalliques, des métaux et des mélanges de ceux-ci.

5. Assemblage selon l'une quelconque des revendications 1 à 4, dans lequel il comprend au moins deux monocouches colloïdales polycristallines circulaires, différentes ou identiques les unes aux autres, les au moins deux monocouches colloïdales polycristallines circulaires étant soit superposées les unes aux autres, soit côte à côte, en réseau, sans se toucher.

6. Procédé de préparation d'un assemblage tel que défini dans l'une quelconque des revendications précédentes comprenant les étapes suivantes :
a) préparer une dispersion aqueuse (A) comprenant :
- au moins un type de particules colloïdales anioniques ayant un diamètre moyen compris 100 nm et 10 µm et ayant une dispersité inférieure à 5 % dudit diamètre,
- au moins un tensioactif cationique dans une concentration comprise entre CMC/10000 à CMC/100, où CMC est la concentration micellaire critique du du ou des tensioactifs cationiques, et
- -un milieu aqueux ;
b) déposer au moins une goutte de la dispersion aqueuse (A) préparée à l'étape a) sur la face supérieure d'un substrat solide, le volume de la au moins une goutte étant inférieur ou égal à 15 µL ;
c) protéger la face supérieure du substrat solide obtenu à l'étape b) des flux d'air et retourner ledit substrat solide ;
d) maintenir le substrat solide dans la position retournée pour laisser la au moins une goutte de la dispersion aqueuse (A) s'évaporer ; puis
e) optionnellement, retourner à l'endroit le substrat solide obtenu à l'étape d).

7. Procédé selon la revendication 6, dans lequel l'angle de contact de la goutte de la dispersion aqueuse (A) préparée à l'étape a) sur le substrat solide est compris entre 20 ° à 120 ° et de préférence entre 40 ° et 100 °.

8. Procédé selon la revendication 6 ou la revendication 7, dans lequel la concentration du ou des types de particules colloïdales anioniques dispersées varie de 0,01 à 1 mg/mL, de préférence de 0,02 à 0,8 mg/mL, et plus préférentiellement de 0,04 à 0,6 mg/mL de la dispersion aqueuse (A).

9. Procédé selon l'une quelconque des revendications 6 à 8, dans lequel la concentration du tensioactif cationique varie de CMC/8000 à CMC/500, et de préférence de CMC/5000 à CMC/1000.

10. Procédé selon l'une quelconque des revendications 6 à 9, dans lequel il comprend en outre, entre les étapes c) et d), une étape d'injection dans la goutte de dispersion aqueuse (A), retournée à l'étape c), d'un volume supplémentaire de ladite dispersion aqueuse (A).

11. Procédé selon l'une quelconque des revendications 6 à 10, dans lequel il comprend en outre, après l'étape d) ou l'étape optionnelle e), la répétition des étapes b) à d), ou optionnellement à e), dans lequel une deuxième goutte de la dispersion aqueuse (A) préparée à l'étape a) est déposée soit sur le dessus, soit à côté, mais sans toucher, de la monocouche colloïdale polycristalline circulaire obtenue à l'étape d) ou à l'étape optionnelle e), et dans lequel le volume de ladite deuxième goutte de dispersion aqueuse (A) est inférieur ou égal à 15 µL.

12. Procédé selon l'une quelconque des revendications 6 à 11, dans lequel il comprend en outre les étapes suivantes :
f) préparer une dispersion aqueuse (B), différente de la dispersion aqueuse (A) précédemment décrite, comprenant :
- au moins un type de particules colloïdales anioniques ayant un diamètre moyen compris entre 100 nm à 10 µm et ayant une dispersité inférieure à 5 % dudit diamètre,
- au moins un tensioactif cationique dans une concentration comprise entre CMC/10000 et CMC/100, où CMC est la concentration micellaire critique du au moins un tensioactif cationique, et
- un milieu aqueux ;
g) déposer au moins une goutte de la dispersion aqueuse (B) préparée à l'étape f) soit sur le dessus, soit à côté, mais sans toucher, de la monocouche colloïdale polycristalline circulaire obtenue à l'étape d) ou à l'étape optionnelle e), le volume de ladite goutte étant inférieur ou égal à 15 µL et l'angle de contact de ladite goutte sur le substrat solide étant de préférence compris entre 20 ° et 120 ° ;
h) protéger la face supérieure du substrat solide obtenu à l'étape g) des flux d'air et retourner ledit substrat solide ;
i) maintenir le substrat solide en position retournée pour laisser la au moins une goutte de dispersion aqueuse (B) s'évaporer ; puis
j) optionnellement, retourner à l'endroit le substrat solide obtenu à l'étape i).

13. Procédé selon l'une quelconque des revendications 6 à 12, dans lequel l'étape d) et/ou l'étape optionnelle i) sont réalisées jusqu'à évaporation complète du milieu aqueux de la goutte de dispersion aqueuse déposée respectivement à l'étape b) et à l'étape optionnelle g).

14. Procédé selon l'une quelconque des revendications 6 à 13, dans lequel l'étape optionnelle e) et/ou l'étape optionnelle j) sont réalisées avant l'évaporation complète du milieu aqueux de la goutte de dispersion aqueuse déposée respectivement à l'étape b) et/ou à l'étape optionnelle g).

15. Procédé selon l'une quelconque des revendications 6 à 14, dans lequel il comprend en outre une étape de transfert de la au moins une monocouche colloïdale polycristalline circulaire obtenue à l'étape d) ou aux étapes optionnelles e), i) ou j), de préférence dans un film polymérique.

16. Utilisation de l'assemblage selon l'une quelconque des revendications 1 à 5 pour l'étiquetage d'un produit d'intérêt, par dépôt direct ou par transfert de préférence dans un film polymérique.
